# EUROPEAN PATENT APPLICATION

(11) **EP 1 779 941 A1**
(43) Date of publication of application: **02.05.2007**
(21) Application number: 06122582.7
(22) Date of filing: 19.10.2006
(51) Int. Cl.: B21D 51/26, B65G 25/02, B21D 43/04

(54) **Unit for feeding tubular pieces of sheet in machines for the production of cans or the like.**

(30) Priority: 28.10.2005 IT BO20050662
(71) Applicant: Cevolani S.p.A, 40068 San Lazzaro di Savena-Bologna (IT)
(72) Inventor: AIUOLA, Paolo, 40127, BOLOGNA (IT)
(74) Representative: Lanzoni, Luciano

(57) **Abstract**

A unit for feeding tubular pieces of sheet in machines for the production of cans or the like (1) comprises a pusher element (2) able to move from a first position (5) in which the pusher element (2) engages with the cans, to a second position (6) in which the pusher element (2) is disengaged from the cans, along a thrust trajectory (7) extending along a feed path for the cans. The pusher element (2) can also move away from the second, disengagement position (6) along a release trajectory (8) which comprises a component parallel with and opposite to the thrust trajectory (7) to insert the tubular pieces (T) in a welding station with greater precision and in a direction which is perfectly straight and parallel with the direction of infeed into the welding station.

## Description

The present invention relates to a unit for feeding tubular pieces of sheet in machines for the production of cans or the like.

At present, machines for the production of cans have a plurality of stations, positioned along a predetermined feed line, designed to carry out successive steps in the production of the containers, starting with flat pieces of sheet.

In particular, the machines have:
- a unit for feeding flat metal sheets into a station for bending the metal sheets to form tubular pieces, that is to say, for "tubularising" the sheets;
- a unit for feeding the tubular pieces into
- a welding station, consisting of a roller cage in which there is a bilateral seam welder which joins the two overlapping free lateral edges of the sheets.

If necessary, the tubular pieces are then cut to the required length and covered with a base at one end. The cans are then filled and closed with a lid.

Returning to the feed unit for the tubular pieces, of particular interest in this text, the unit may currently consist of a conveyor belt forming a path closed in a loop and on which a plurality of projections positioned perpendicularly to the belt and equidistant from one another are fixed.

In this way, the tubular pieces are picked up at the "tubularising" unit outfeed, transported by the belt and pushed into the welding station by said projections.

During the end step of the push, the projections follow a trajectory which curves downwards dictated by the conveyor belt. In this way, the projections can also divert the trajectory of the tubular pieces.
For this reason and due to demand for an increase in the productivity of the machines per unit of time, another feed station configuration involves the use of a pusher element operated by a suitable mechanism, for example a four-bar linkage, or by a pendular movement, to carry out a cycle of contact, push, release and return to the first contact position more rapidly than in the previous solution.

In this case, the pusher element follows a trajectory which curves upwards, which can modify the trajectory of the tubular pieces.

Disadvantageously, feed units configured in this way have several disadvantages, above all relating to the precision with which the pieces are inserted in the welding station.

With a feed unit of the type described above, during the step of tubular piece insertion in the welding station, the pieces are also subjected to a force component in the direction perpendicular to the direction of feed. In this way, the tubular pieces may be subjected to a trajectory which is not perfectly straight and aligned with the welding station and this causes imprecise infeed of the pieces.

Consequently, the welding may not be precise enough, or may be below the desired quality.

The welding is performed by precisely overlapping the two lateral edges of the sheet and joining them.

If the tubular piece is not perfectly aligned with the welding station, the two edges may not be perfectly overlapping. In this case the welding is not precise enough.

The Applicant has discovered that various aspects of feed units of the type described above can be improved, in particular as regards their capacity for precise insertion of the tubular pieces in a welding station, maintaining high production speeds.

The aim of the present invention is, therefore, to propose a unit for feeding tubular pieces of sheet in machines for the production of cans or the like which allows the insertion of said pieces in a perfectly and exclusively straight way.

Further characteristics and advantages of the invention are more apparent from the detailed description of a preferred, non-limiting embodiment of a feed unit according to the present invention.

The invention is described below with reference to the accompanying drawings, provided by way of example only and, therefore, without limiting the scope of the invention, and in which:
- Figure 1 is a perspective view of a feed unit in accordance with the present invention;
- Figure 2 is a front view of a detail of the device from Figure 1 in a first operating position;
- Figure 3 is a front view of the device from Figure 1 in a second operating position;
- Figure 4 is a front view of the device from Figure 1 in a third operating position;
- Figure 5 is a front view of the device from Figure 1 in a fourth operating position;
- Figure 6 is a perspective view of the feed unit from Figure 1 with some parts removed to better illustrate others;
- Figure 7 is a cross-section of a detail of the feed unit from Figure 1.

With reference to the accompanying drawings, the numeral 1 denotes as a whole a unit for feeding tubular pieces of sheet in machines for the production of cans or the like in accordance with the present invention.

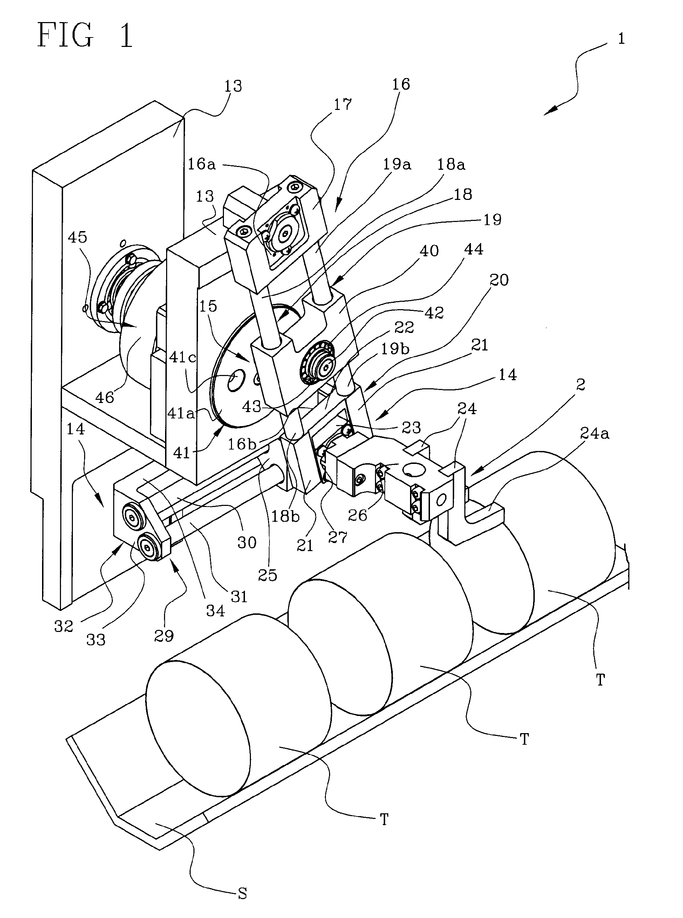

The feed unit 1 basically comprises a movable pusher element 2 designed to make contact with the tubular pieces "T" (see Figure 1) which, after being welded will constitute the cans.

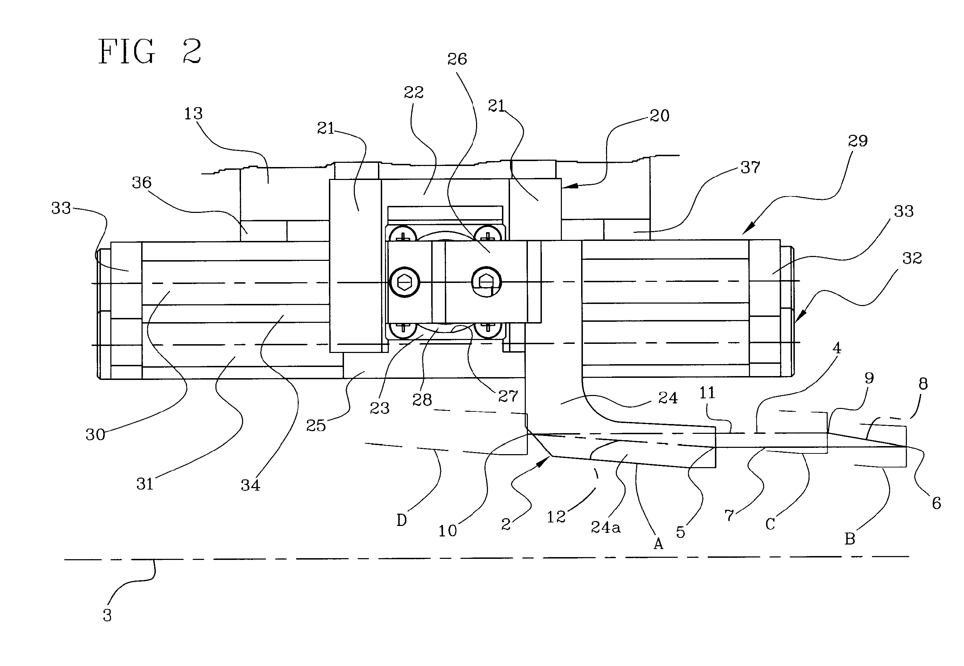

The feed unit 1 is positioned along a feed path 3 extending between a "tubularising" station (not illustrated) and a welding station (not illustrated). The feed path 3 follows a sliding channel "S" on which the tubular pieces "T" slide. The pusher element 2 is movable, driven by means described in more detail below, along a closed path 4 (see dashed and dotted line in Figure 2).

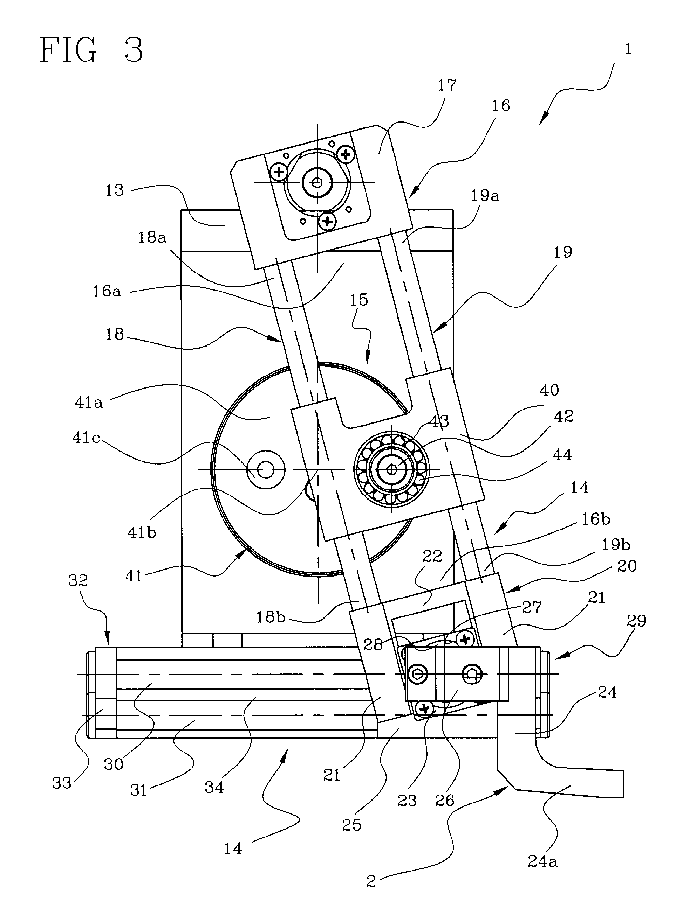

In particular, the pusher element 2 can move from a first position 5 in which it engages with the tubular pieces "T" to a second, disengagement position 6 (see Figure 3) along a thrust trajectory 7 extending along the feed direction 3. Said thrust trajectory 7 is straight and is aligned with the operating direction defined by the subsequent welding station. Once it has reached the second, disengagement position 6, the pusher element 2 can move from the second position 6 along a release trajectory 8 comprising a component parallel with and opposite to the thrust trajectory 7. In other words, the pusher element 2 is detached from the tubular piece immediately after it reaches the disengagement position 6, moving away without subjecting the tubular pieces to any further force components.

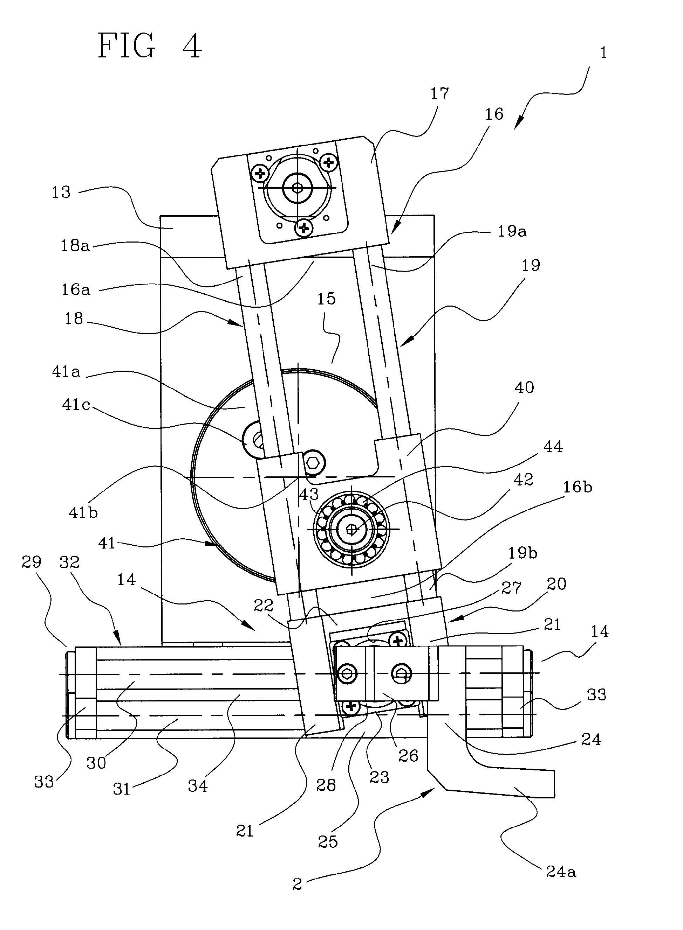

The release trajectory 8 also comprises a component perpendicular to the thrust trajectory, away from the disengagement position 6, reaching a height greater than the thrust trajectory 7. The release trajectory 8 ends when the pusher element 2 reaches a third, intermediate position 9 (see Figure 4).

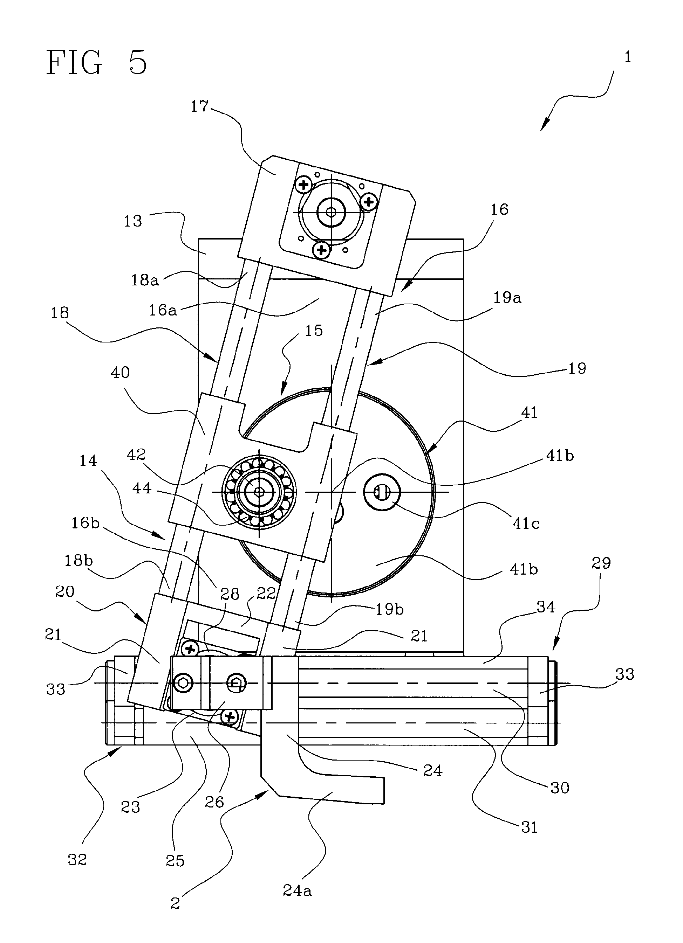

The pusher element 2 can also move from the third, intermediate position 9 to a fourth, intermediate position 10 (see Figure 5) along a return trajectory 11 which is straight and parallel with the thrust trajectory 7.

Finally, the pusher element 2 can move between the fourth, intermediate position 10 and the first position 5 in which it engages with the tubular pieces "T" along an engagement trajectory 12 towards the engagement position 5, in which contact is made between the pusher element 2 and the pieces "T", positioned at a height less than that of the fourth, intermediate position 10. The engagement trajectory 12 comprises a component parallel with and in the same direction as the thrust trajectory 7 and a component perpendicular to the thrust trajectory 7.

For production of the trajectories described above, the feed unit 1 may also comprise a fixed support 13 which mounts guide means 14 connected to the pusher element 2 and control means 15, operatively connected to the guide means 14 and necessary to operate them.

In the case illustrated the guide means 14 comprise a pendulum 16, oscillating between a first position, towards the "tubularising" station, and a second position, towards the welding station.

More precisely, the pendulum 16 comprises an end body 17 positioned at and forming its first end 16a and hinged to the fixed support 13. There is also a first rod 18 and a second rod 19, positioned parallel with one another. The rods 18, 19 are connected to the end body 17 close to their respective first ends 18a, 19a. Close to respective second ends 18b, 19b of the rods 18, 19, that is to say, close to a second end 16b of the pendulum 16, a fork 20 is connected which has two parallel tines 21 extending in a direction substantially parallel with the longitudinal extension of the pendulum 16. In addition, a connecting body 22 joins the two tines 21 and is positioned perpendicularly to the tines 21. Inserted between the tines 21 of the fork 20 is a slider 23 which can slide along a direction parallel with the longitudinal extension of the pendulum 16 and the tines 21. The slider 23 is connected to the pusher element 2 and is necessary to convert the oscillating arc of a circle movement generated by the pendulum 16 into a movement compatible with the functions of the pusher element 2.

The pusher element 2 comprises two "L"-shaped structures 24 with a relative side 24a positioned in a direction substantially parallel with the thrust trajectory 7. Said side 24a is designed to make contact with the pieces "T" and to apply the thrust necessary for feed. The "L"-shaped structures 24 are connected to a shoe 25 by means of a supporting base 26. The shoe 25 is rotatably inserted in a hole 27 made in the slider 23 and there is also a first bearing 28 between the hole 27 and the shoe 25. Therefore, the shoe 25 can rotate relative to the slider 23 and the fork 20 and can move (integrally with the slider 23) relative to the fork 20.

Moreover, the shoe 25 slides along a linear guide 29 extending along a direction parallel with the thrust trajectory 7. The guide 29 consists of a first and a second bar 30, 31, positioned parallel with one another in a plane at a 45° angle to a plane defined by the oscillation of the pendulum 16. The two bars 30, 31 are connected to a supporting body 32, consisting of two shoulders 33, parallel with one another and perpendicular to the direction of extension of the bars 30, 31, and also consisting of a plate 34 which connects the shoulders 33 and is parallel with the direction of extension of the bars 30, 31.

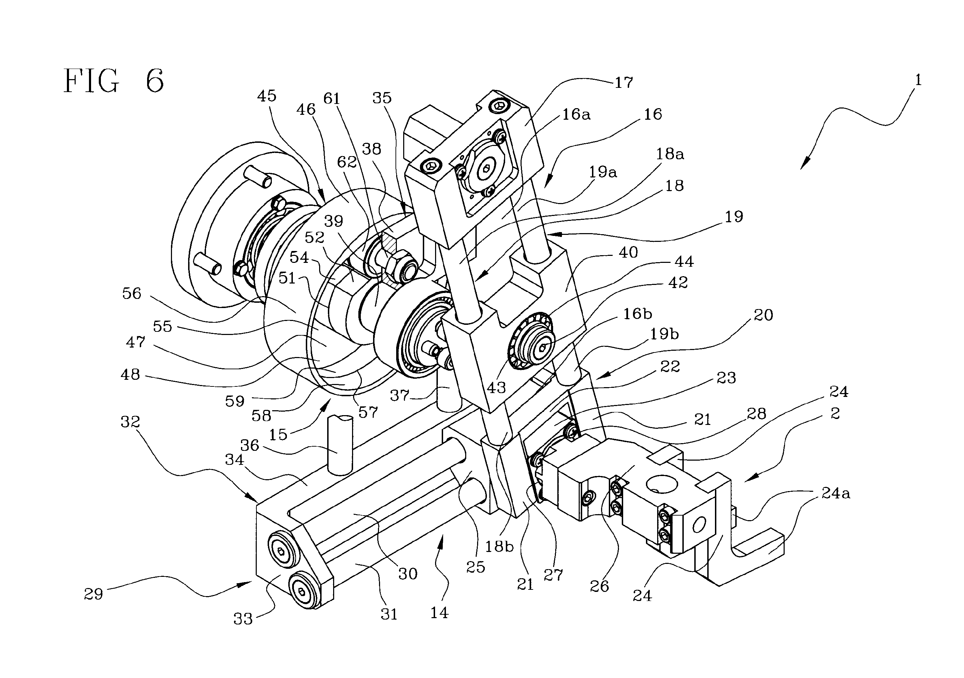

The linear guide 29 is connected to a frame 35 slidably mounted on the fixed support 13 (see Figure 6). The frame 35 comprises two uprights 36, 37 which are parallel with one another. Close to the first ends of the uprights 36 and 37 there is a bracket 38 positioned in a direction substantially perpendicular to the longitudinal extension of the uprights 36, 37 and connected to them. The frame 35 is connected to the linear guide 29 close to respective second ends of the uprights 36, 37 in such a way that the longitudinal extension of the uprights 36, 37 is perpendicular to the longitudinal extension of the guide 29 bars 30, 31. The frame 35 and the linear guide 29 can move along a direction perpendicular to the thrust trajectory 7 between a first position, at a lesser height, and a second position, at a greater height.

The control means 15, necessary to operate the guide means 14, comprise a driving shaft 39, operatively connected to the guide means 14 and positioned in such a way that its longitudinal extension is perpendicular to the plane defined by the oscillation of the pendulum 16. The control means 16 also comprise a carriage 40 slidably inserted along the rods 18, 19 of the pendulum 16 so that it can move along a direction parallel with the longitudinal extension of the rods 18, 19.

Keyed to the driving shaft 39, close to its first end, is a first disk 41 coaxial with the shaft 39. Mounted on the first disk 41 there is a first pin 42 whose longitudinal extension is perpendicular to a base surface 41a of the first disk 41 and which is in an off-centre position relative to a centre 41b of the first disk 41. The first pin 42 is designed to engage in a through-cavity 43 made in the carriage 40, in such a way that the first pin 42 can rotate relative to the carriage 40. For this purpose, there is also a pair of opposite taper roller bearings 44, positioned between the first pin 42 and an inner surface of the through-cavity 43. In this way, the oscillating movement of the pendulum 16 is made possible. The driving shaft 39 drives the rotation of the first pin 42 which describes a circular trajectory and interacts with the carriage 40. In particular, the first pin 42 exerts a force which is discharged on the carriage 40. Said force may be broken down into a component parallel with the direction of carriage 40 sliding and a component perpendicular to the direction of carriage 40 sliding. The parallel component exerts an action exclusively on the carriage 40, which slides along the pendulum 16, whilst the perpendicular component, through the carriage 40, exerts an action on the pendulum 16 which, in this way, performs an oscillating movement. On the base surface 41a of the first disk 41 there is also another seat 41c positioned at a lesser radius than the first pin 42 and designed to receive the first pin 42, in an alternative position to that illustrated, to allow the pusher element 2 to produce a shorter thrust trajectory 7.

In this way, a greater number of tubular pieces "T" can be fed per unit of time without a proportional increase in the speed of movement of the pusher element 2.

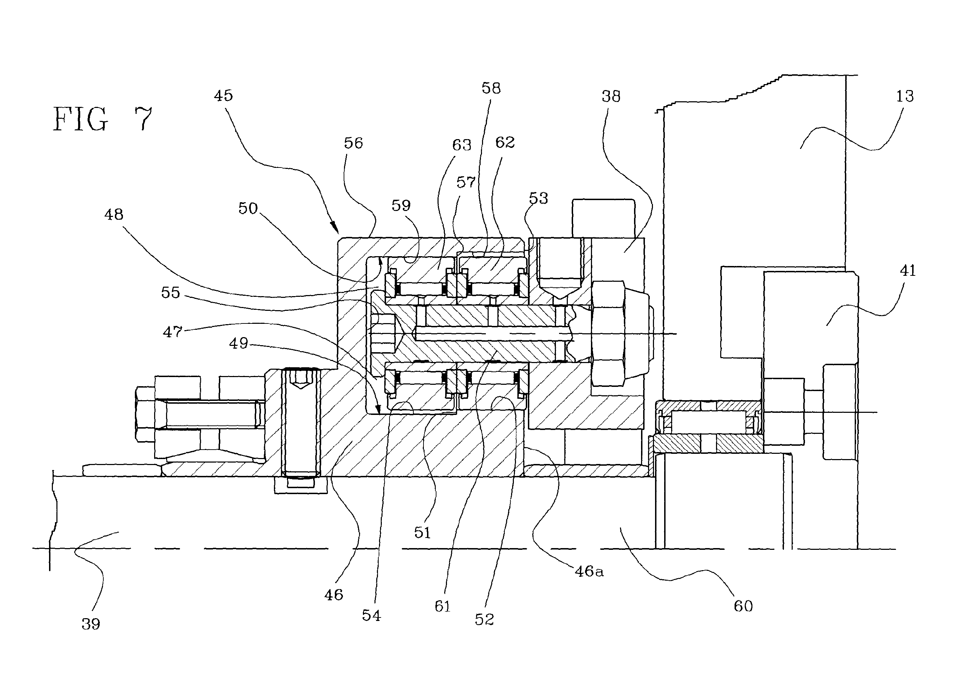

The control means 15 also comprise a cam device 45 which, connected to the frame 35, allows its alternating straight vertical movement. The cam device 45 consists of a second disk 46 or circular cam profile, keyed to the driving shaft 39, which has a race 47 on its base surface. The race 47 consists of a groove 48 with a radially inner lateral surface 49 and a radially outer lateral surface 50. The inner lateral surface 49 has a first step 51 which divides said surface into a first part 52, adjacent to an edge 53 of the groove 48, and a second part 54, adjacent to a base 55 of the groove 48. The first part 52 extends towards a peripheral surface 56 of the second disk 46. The outer lateral surface 50 has a second step 57 which divides said surface into a third part 58 adjacent to the edge 53 of the groove 48 and a fourth part 59 adjacent to the base 55 of the groove 48. The fourth part 59 extends towards the centre of the second disk 46 (see Figure 7).

Connected to the frame 35 bracket 38 there is a second pin 60 or cam follower roller, designed to engage in the race 47 on the second disk 46. In particular, there are second and third cylindrical bearings 61, 62, positioned on the second pin 60 and in contact with the race 47. The bearings 61, 62 are perfectly coaxial with one another. In this way, the second bearing 61 is in contact exclusively with the first part 52 of the inner lateral surface 49 of the groove 48 and the third bearing 62 is in contact exclusively with the fourth part 59 of the outer lateral surface 50 of the groove 48. Therefore, this provides perfect rolling between the second pin 60 and the race 47. Suitable shaping of the race or cam 47 allows the alternating straight movement of the frame 35 and the linear guide 29.

Another embodiment (not illustrated) has a cam device 45 with a different shape. The alternating straight motion of the frame 35 and the guide 29 is produced by means of a cam keyed to the driving shaft 39 on which the frame 35 bracket 38 rests directly. Return springs may be used to guarantee constant contact between the cam and the frame 35 bracket 38.

The entire feed unit 1 is mounted on a fixed structure (not illustrated) and can be fixed in a plurality of positions along a direction parallel with the feed path 3 to adapt it to the length of the tubular pieces "T" to be fed.

Finally, the pusher element 2 can be fixed in a plurality of positions along a direction perpendicular to the feed path 3 to adapt the feed unit 1 to the diameter of the tubular pieces "T" to be fed.

The combination of the oscillating motion of the pendulum 16 and the alternating straight motion of the linear guide 29 allows the pusher element 2 to reach all of the positions described along the predetermined trajectories 7, 8, 11, 12. In particular, the pusher element 2 reaches the first, engagement position 5 when the pendulum 16 is vertical and the guide 29 is in the first position at a lesser height (configuration "A" in Figure 2). The second, disengagement position 6 is reached when the pendulum 16 is in its second, oscillating position and the guide 29 remains in its first position (configuration "B" in Figures 2 and 3). The third, intermediate position 9 is reached thanks to simultaneous movement of the guide 29 to its second position at a greater height and the return of the pendulum 16 to its intermediate position between the vertical position and the second, oscillating position (configuration "C" in Figures 2 and 4). The fourth, intermediate position 10 is reached when the pendulum 16 is in its second, oscillating position and the guide 29 remains in its first position (configuration "D" in Figures 2 and 5).

Finally, the straight thrust trajectory 7 is produced thanks to the combination of the oscillating motion of the pendulum 16 and the alternating motion of the slider 23 relative to the fork 20. The arc of a circle motion can be broken down into a component parallel with the linear guide 29, compatible with the motion of the shoe 25 and the pusher element 2, and a component perpendicular to the guide 29 which is compensated by the alternating motion of the slider 23 relative to the fork 20.

The present invention achieves the preset aims and brings important advantages.

Firstly, production of this mechanism allows the tubular pieces "T" to be inserted in the welding station with greater precision and in a direction which is perfectly straight and parallel with the direction of infeed into the welding station. The invention guarantees that the pusher element follows a straight trajectory. Moreover, the release trajectory 8 is set up in such a way that the pusher element 2 is detached and moves away from the tubular piece immediately after reaching the disengagement position 6. In this way, the pusher element does not interact any further with the pieces "T" and so is not able to subject them to components of motion or force perpendicularly to their direction of infeed into the welding station. Precision in the infeed of the tubular pieces "T" allows a noticeable improvement in the welding.

Moreover, by making just a few changes at the design stage, the present invention can be adapted to execute different trajectories depending on new requirements, even relative to different dimensions of the cans to be produced. For example, by changing the shape of the race 47, it is possible to vary the law of motion of the linear guide 29.

The invention described has evident industrial applications and may be modified and adapted without thereby departing from the scope of the inventive concept. Moreover, all details of the invention may be substituted by technically equivalent elements.

## Claims

1. A unit for feeding tubular pieces of sheet in machines for the production of cans or the like, the unit comprising at least a pusher element (2) subject to means designed to allow its movement at least between a first position (5) in which the pusher element engages with the tubular pieces and a second position (6) in which the pusher element is disengaged from the cans, along a thrust trajectory (7), extending along a feed path (3) for the cans, the pusher element (2) also able to move away from the second, disengagement position (6) along a release trajectory (8), the unit being **characterised in that** the release trajectory (8) comprises a component parallel with and opposite to the thrust trajectory (7).

2. The unit according to claim 1, **characterised in that** the pusher element (2) is moved away from the feed path (3) when it is positioned in the release trajectory (8).

3. The unit according to claim 2, **characterised in that** the pusher element (2) follows a closed path (4) comprising the thrust trajectory (7) and the release trajectory (8).

4. The unit according to claim 1, 2 or 3, **characterised in that** the pusher element (8) can also move to the first, engagement position (5) along an engagement trajectory (12); said engagement trajectory (12) comprising a component parallel with and in the same direction as the thrust trajectory (7).

5. The unit according to claim 4, **characterised in that** the pusher element (2) moves towards the feed path (3) when it travels along the engagement trajectory (8).

6. The unit according to claim 4 or 5, **characterised in that** it also comprises:
- a fixed support (13);
- guide means (14) for defining the trajectories (7, 8, 12) of the pusher element (2) and connected to the fixed support (13);
- control means (15) for operating the guide means (14) and connected to the guide means (14).

7. The unit according to claim 6, **characterised in that** the guide means (14) comprise a pendulum (16) oscillating between two limit positions; the pendulum (16) comprising a first end (16a) hinged to the fixed support (13) and a second end (16b) opposite the first end (16a) having a fork (20) connected to the pusher element (2).

8. The unit according to claim 7, **characterised in that** the guide mans (14) comprise a linear guide (29) parallel with the thrust trajectory (7) and a shoe (25) connected to the pusher element (2) and able to slide in the guide (29); the guide (29) comprising a supporting body (32); the shoe (25) being operatively connected to the fork (20).

9. The unit according to claim 8, **characterised in that** the guide means (29) comprise a slider (23) inserted in the fork (20) and able to slide along a longitudinal direction of extension of the pendulum (16); the slider (23) having a hole (27) in which the shoe (25) is rotatably inserted.

10. The unit according to claim 9, **characterised in that** the guide means (14) also comprise a frame (35), connected to the supporting body (32), slidably inserted in the fixed support (13), and able to move in a direction perpendicular to the thrust trajectory (7) between a first position and a second position.

11. The unit according to claim 10, **characterised in that** the control means (15) comprise at least a driving shaft (39), operatively connected to the guide means (14) for producing said trajectories.

12. The unit according to claim 11, **characterised in that** the control means (15) also comprise a carriage (40) which can slide along the longitudinal extension of the pendulum (16) and is connected to the shaft (39).

13. The unit according to claim 12, **characterised in that** the control means (15) also comprise a first disk (41) keyed to the shaft (39); the first disk (41) comprising a first pin (42) off-centre relative to a centre (41b) of the first disk (41) and engaging in a through-cavity (43) made in the carriage (40) for generating a pendulum (16) oscillation.

14. The unit according to claim 13, **characterised in that** the control means (15) also comprise a second disk (46) keyed to the driving shaft (39) and a cam device (45) for generating an alternating straight movement of the frame (35) and the guide (29).

15. The unit according to claim 14, **characterised in that** the cam device (45) comprises a race (47) made on the second disk (46) and a second pin (60) connected to the frame (35) and engaging in the race (47).
